(19) **Europäisches Patentamt**
**European Patent Office**
**Office européen des brevets**

(11) Publication number: **0 437 360 A1**

## (12) EUROPEAN PATENT APPLICATION

(21) Application number: **91300169.9**

(22) Date of filing: **10.01.91**

(51) Int. Cl.⁵: **A23L 1/0532, A23L 1/307**

(30) Priority: **11.01.90 US 463569**

(43) Date of publication of application:
**17.07.91 Bulletin 91/29**

(84) Designated Contracting States:
**BE CH DE DK ES FR GB GR IT LI NL SE**

(71) Applicant: **WARNER-LAMBERT COMPANY**
**201 Tabor Road**
**Morris Plains New Jersey 07950 (US)**

(72) Inventor: **Shaw, James J.**
**34 Valley View Street**
**Morristown, New Jersey 07950 (US)**
Inventor: **Luo, Shiuh J.**
**51 Woodcrest Drive**
**Livingston, New Jersey 07039 (US)**
Inventor: **Bunick, Frank J.**
**47 Long Ridge Road**
**Randolph, New Jersey 07869-5805 (US)**

(74) Representative: **Jones, Michael Raymond et al**
**HASELTINE LAKE & CO. Hazlitt House 28**
**Southampton Buildings Chancery Lane**
**London WC2A 1AT (GB)**

(54) Hydrocolloid bulking agent and compositions including same.

(57) A hydrocolloid-based composition comprising crosslinked alkaline earth metal alginate microspheres having a diameter of from 1.0 to 200 micrometres, useful as a low calorie, low fat bulking agent and lubricant in a variety of edible materials.

EP 0 437 360 A1

# HYDROCOLLOID BULKING AGENT AND COMPOSITIONS INCLUDING SAME

The present invention relates to hydrocolloids which are useful as bulking agents and lubricants, and particularly to a novel microspheric hydrocolloid-based bulking agent and lubricant which is low in calories and may be incorporated into a variety of food products.

Alginates and other hydrocolloids have found utility in the prior art as fat replacers in products such as salad dressings, puddings and so forth. Hydrocolloids used in such prior art food products are generally fully hydrated, and are dispersed as a continuous phase. For example, U.S. Patent No. 2,808,337 to GIBSEN, discloses an alginate composition for making milk puddings which is prepared by suspending wet fibrous alginic acid in a quantity of a water miscible lower aliphatic alcohol, followed by blending in powdered sodium carbonate and a calcium salt.

U.S. Patent No. 2,854,340 to KOHLER et al., provides stabilizers for frozen deserts which comprise alginic acid and amides, obtained by a reaction between alginic acid esters and liquid ammonia or amines.

U.S. Patent No. 3,574,641 to O'CONNELL et al., illustrates a French dressing containing a propylene glycol alginate which is said to be highly neutralized.

U.S. Patent No. 3,691,150 to NIELSEN et al., shows a method of preparing propylene glycol alginate wherein a salt of alginic acid is held immobile while propylene oxide, together with a diluent such as ethanol, move through the bed or mass of the alginic component.

U.S. Patent No. 4,305,964 to MORAN et al., discloses low calorie, cream-like food products comprising a continuous aqueous phase and a dispersed gelled aqueous phase. The dispersed phase consists of water beads having an average diameter of 5-10 micrometres which are said to optionally contain hydrocolloids such as sodium alginate. In one preferred method of preparation, a hot aqueous solution of gellable material is poured into a triglyceride oil, and the gellable material is set by cooling and stirring to obtain gelled water beads suspended in oil, after which the gelled beads are separated from the excess of the oil and dispersed in the liquid aqueous phase. Alternately, a phase inversion of the original gelled beads in oil is provided by adding additional water containing a suitable emulsifier and mildly stirring the mixture until phase inversion is achieved.

U.S. Patent No. 4,347,261 to CHALLEN et al., discloses a process for preparing calcium alginate and low-methoxy pectate gels whereby particles of solid calcium sulfate are rapidly mixed throughout an aqueous alginate or low-methoxy pectate sol, and the mixture is then allowed to gel under shear-free conditions.

U.S. Patent No. 4,375,481 to KUWABARA et al., demonstrates a process for the production of an edible roe-like spherical structure which comprises synchronously discharging at least two edible materials through a multi-tubular nozzle having inner and outer passages, followed by chemically gelling the resulting multi-layer spherical structure with a metal ion. As illustrated in Example 1 of this reference, one of the edible materials may comprise sodium alginate, which is discharged together with a salad oil and a sol containing a gelatin, into a three percent aqueous solution of calcium chloride. The sodium alginate in this example is ejected through a nozzle having an innermost diameter of 8.5 mm.

U.S. Patent No. 4,389,419 to LIM et al. discloses a process for encapsulating vitamin-containing oils and oil-soluble substances in multi-compartmentalized microcapsules. LIM et al. form an emulsion consisting of a continuous phase of aqueous alkali metal alginate with an alcohol-insoluble polysaccharide, and a dispersed phase of vitamins dissolved in an oil. The emulsion is then formed into droplets and immersed into an alcoholic solution of multivalent cations, in order to provide an alginate matrix which encapsulates the polysaccharide and vitamins.

U.S. Patent No. 4,389,426 to REISSMANN et al., illustrates a water-in-oil emulsion spread which includes at least one hydrocolloid capable of forming a linear gel structure and at least one hydrocolloid capable of forming a spherical gel structure.

U.S. Patent No. 4,436,759 to TRILLING et al., discloses shaped food products based on a gel forming system consisting of sodium alginate and calcium carbonate, to produce a calcium alginate gel. A sequestering agent such as sodium hexametaphosphate is employed.

U.S. Patent No. 4,444,799 to VANDERVEER et al., discloses a method and composition for producing soft edible baked products which utilizes a gel made from corn syrup, sodium alginate, glycerin, an edible calcium salt and a dispersing agent.

U.S. Patent No. 4,510,166 to LENCHIN et al., discloses fat or oil replacements which are formed from tapioca dextrins having a DE of about 2 or less and a hot flow viscosity and gel strength of about 20-100 sec. and 65-930 g at 25-35% solids.

U.S. Patent No. 4,702,921 to UEDA, discloses an aqueous emulsion-type method for preparing fish-egg-like edible products having calcium alginate membranes. The final product has a diameter of 2 to 8 mm.

U.S. Patent No. 4,744,996 to RAKOW et al., discloses a method for producing microalgae-based foodstuffs by the combination of microalgae, gelling agent and water. The resulting product is said to resemble the thin-sheet Japanese Nori product.

In accordance with the present invention, a new low or non-caloric bulking agent in the form of hydrocolloid microspheres is provided. The inventive hydrocolloid microspheres may also function as fat replacing low or non-calorie, non-reactive lubricant particles, which upon hydration in the mouth impart a lubricity to the food or confection in which they are included. The hydrocolloid microspheres provided by the invention are of low or intermediate moisture, and function as a discontinuous phase.

Generally, the present invention is directed to a hydrocolloid-based composition comprising cross-linked alkali metal alginate microspheres having a diameter of from about 1.0 to about 200 micrometres.

The invention also contemplates the use of this novel hydrocolloid-based composition in a variety of edible materials, in order to provide the edible material with a low or non-caloric, low fat bulking agent and lubricant which overcomes the inherent limitations of prior art bulking agents and lubricants.

Applicants have unexpectedly discovered a hydrocolloid-based composition comprising cross-linked alkali metal alginate microspheres having a diameter of from 1.0 to 200 micrometres.

The cross-linked alkali metal alginate microspheres provided in accordance with the invention preferably have a diameter of from 5 to 100 micrometres and most preferably have a diameter of from 10 to 50 micrometres.

The preferred alkali metal alginate utilized in accordance with the present invention preferably comprises calcium alginate.

The above-described compositions have been found to yield superior results when incorporated into edible materials as fat replacing bulking agents or lubricants. Particularly, edible products including the hydrocolloid-based compositions of the invention exhibit excellent textural properties and are provided with an effective means for reducing the caloric and/or fat content of the edible material.

Generally, the compositions of the invention may be incorporated into a wide variety of edible foodstuffs, including those selected from natural and artificial meat, processed meat and meat by-products, baby food, jelly and jams, gelatin and puddings, peanut butter, frostings and icings, baked goods, dairy products, dressings, juices, sauces, pet foods, cereals, nut additives, instant breakfasts, confectioneries and gums, chocolates, soups, ice cream, non-dairy toppings and beverages, toothpaste and shaving cream.

The presently disclosed hydrocolloid bulking agent is preferably employed in amounts of from 33 to 55% by weight, based on the total weight of the edible material.

Suitable natural and artificial meat, processed meat and meat by-products may be selected from sausage, bacon, corned beef hash, pepperoni, bologna, hot dogs and spam.

Useful baked goods which may incorporate the novel hydrocolloid-based compositions of the invention may be selected from flour containing dough, cookies, pastries, filled pastries, cakes, cupcakes, doughnuts, breads and pies.

The hydrocolloid-based compositions of the invention may be used in a wide variety of dairy products, such as those selected from butter, yogurt, margarine, sour cream, cream cheese, milk, evaporated milk, milk concentrate, cheese and cheese products and mayonnaise.

Exemplary dressings which may include the inventive hydrocolloid-based compositions may be selected from meat and vegetable dressings.

Juices and beverages which may utilize the compositions of the invention may be selected from a variety of juices, such as those selected from orange juice, apple juice, pineapple juice, cranberry juice, lemon juice, lemonade and grapefruit juice.

Illustrative sauces which may usefully employ the hydrocolloid-based compositions of the invention may be selected from spaghetti sauce, gravy mixes, seasoning sauce, barbecue sauce, taco and salsa sauces, steak sauces, ketchup and mustard.

Pet foods which may include the inventive hydrocolloid bulking agent may be selected from cat food, dog food and fish food.

Suitable confectioneries and gums may be selected from candies such as chocolates, nougats, fondant cremes, caramel and marshmallow, pressed tablets, lozenges, chewing gum and bubble gum. The hydrocolloid bulking agent of the invention is also useful in preparing chewing gum crystal type center-fill compositions.

The hydrocolloid-based compositions of the invention are therefore useful in a wide variety of foodstuffs as reduced calorie, low fat bulking agents and lubricants.

Generally, the novel hydrocolloid-based microspheres of the invention are prepared by a process which comprises :

(a) reacting an alkali metal alginate with a multivalent cation to form hydrocolloid-based microspheres having a diameter of from 1.0 to 200 micrometres and

(b) recovering the microspheres.

There are four methods for carrying out the above-described general procedure of hydrocolloid preparation.

According to a first method of preparation, hydrocolloid-based microspheres are prepared by a process which comprises :

(a) providing an aqueous solution of an alkali metal alginate ;

(b) providing a reaction solution comprising an organic solvent which includes therein a multivalent cation;

(c) atomizing the aqueous alkali metal alginate into the reaction solution to form hydrocolloid-based microspheres ; and

(d) recovering the microspheres.

The alkali metal alginate utilized in the first method of preparation may be selected from potassium alginate, sodium alginate and mixtures thereof. Preferably, the alkali metal alginate comprises sodium alginate.

Preferably, the aqueous solution of an alkali metal alginate comprises from 0. 25 to 3.0 percent by weight of the alkali metal alginate, based on the total weight of the aqueous solution. The aqueous solution of alkali metal alginate preferably has a viscosity which is less than or equal to 300 cps.

In accordance with another preferred aspect of the first method, the reaction solution comprises an alcohol saturated with the multivalent cation, which preferably comprises calcium cation. The organic solvent employed may be selected from methyl alcohol, ethyl alcohol, isopropyl alcohol, butyl alcohol, acetone, ethyl acetate and mixtures thereof. The preferred organic solvent is ethyl alcohol. Generally, the organic solvent should be selected so as to provide a reaction solution having a density and/or surface tension which is less than the density of the hydrocolloid-based microspheres produced.

In order to form microspheres having the preferred range of diameters, the atomizing step should be carried out at a pressure greater than 5 psi, and preferably is carried out at a pressure of from 10 to 100 psi. Most preferably, the atomizing step should be carried out at a pressure of from 20 to 60 psi.

The alkali metal alginate may be atomized at a spray rate of from 1 to 200 ml/min., and preferably is atomized at a spray rate of from 5 to 20 ml/min. It should be understood, however, that much higher spray rates may be employed in accordance with the present invention, as would be provided, for example, by a full-scale plant operation.

In accordance with the particular spray rate selected, atomization should be carried out with a spray nozzle having an orifice of sufficient diameter to form the hydrocolloid-based microspheres. For example, spray nozzles having a 0.2-3.0 mm orifice are particularly useful.

The hydrocolloid-based bulking agent prepared in accordance with all of the methods of the invention may be recovered by methods well known in the art, preferably by filtration, centrifugation or settling. Following recovery, the bulking agent may be washed to remove salts and impurities, and foods of low water activity may optionally be dried.

Thus, a preferred form of the first method for preparing alginate microspheres comprises :

(a) providing an aqueous solution of sodium alginate ;

(b) providing a reaction solution comprising an organic solvent saturated with calcium chloride ;

(c) atomizing the aqueous sodium alginate solution into the reaction solution to form calcium alginate microspheres having a density greater than the density of the reaction solution, the microspheres having a diameter of from 10 to 50 micrometres ; and

(d) recovering the calcium alginate microspheres.

According to this preferred first method of preparation, the solution of sodium alginate is atomized into a reaction solution consisting of an organic solvent, preferably ethyl alcohol, saturated with a calcium salt such as calcium chloride. The density and/or surface tension of the organic solvent is such that the micro-particles of algin settle, inhibiting film formation on the surface of the calcium bath. Calcium chloride has sufficient solubility in organic solvents such as ethyl alcohol to enable the sodium alginate droplets to cross-link into calcium alginate microspheres upon contacting the calcium bath. The temperature of the aqueous bath is not critical with room temperatures being useable.

The first method provided in accordance with the invention therefore overcomes the limitations of beadlet particle size encountered when a solution of sodium alginate is sprayed into an aqueous calcium bath. The size limitation arises from the greater surface tension of an aqueous calcium solution and the corresponding need for heavier particles to penetrate the surface. Hydrocolloid microspheres prepared in accordance with the first method of preparation may be formed without the need for sequesterants to slow the reaction rate and prevent skin formation at the surface of the liquid, thereby permitting the use of simpler spray nozzles and control conditions.

According to the first method of preparation, the hydrocolloid particle size is controlled by the atomization pressure, the viscosity of the sodium alginate solution and the spray-nozzle configuration. As previously discussed, atomization pressures greater than 5 psi, algin viscosities of 300 cps or less and a spray nozzle of 0.2-3.0 millimeters orifice are useful. Further, alginates yielding a 1% solution viscosity of 30-60 cps are also useful for microsphere production according to the first method of preparation. In this regard, a 95% ethyl alcohol bath saturated with calcium chloride is suitable.

In accordance with a second method of preparation, a process for preparing hydrocolloid-based microspheres comprises :

(a) providing an aqueous solution of an alkali metal alginate ;

(b) providing a reaction solution comprising an organic solvent which includes therein a multivalent cation;

(c) passing the aqueous solution and the reaction solution through a spray nozzle to blend the solutions prior to or upon exiting from an orifice of the spray nozzle, to form hydrocolloid-based microspheres ; and

(d) recovering the microspheres.

The spray nozzle utilized with this second method of preparation preferably has concentric jets. The concentric jets most preferably comprise inner and outer jets, the inner jet being movable with respect to the outer jet, in order to vary the mixing time of the aqueous and reaction solutions.

The alkali metal alginate employed in accordance with the second method of preparation is selected from potassium alginate, sodium alginate and mixtures thereof. Preferably, the alkali metal alginate comprises sodium alginate.

The multivalent cation employed again preferably comprises calcium cation, such as calcium chloride.

As with the first method, the organic solvent employed may be selected from methyl alcohol, ethyl alcohol, isopropyl alcohol, butyl alcohol, acetone, ethyl acetate and mixtures thereof. The reaction solution preferably comprises an organic solvent which is saturated with the multivalent cation, and the organic solvent preferably comprises from 50 to 100 percent by weight of the reaction solution. It is to be understood that the organic solvent may include an amount of water necessary to facilitate dissolving the multivalent cation into the reaction solution. Also, the density of the reaction solution is preferably less than the density of the microspheres produced.

The aqueous solution of the alkali metal alginate utilized in the second method preferably comprises from 0.25 to 3.0% by weight of the alkali metal alginate, based on the total weight of the aqueous solution. The aqueous solution of an alkali metal alginate preferably has a viscosity which is less than or equal to 300 cps.

In accordance with the second method of preparation, the aqueous solution and the reaction solution are passed through the spray nozzle at a pressure greater than 5 psi, preferably at a pressure of from 10 to 100 psi, and most preferably at a pressure of from 20 to 60 psi.

Further, the aqueous solution and the reaction solution may be passed through the spray nozzle at a spray rate of from 1 to 200 ml/min., and preferably at a spray rate of from 5 to 20 ml/min, although much higher spray rates may be utilized during a production-scale plant operation.

Therefore, in accordance with a preferred form of the second method of preparation, a method for preparing calcium alginate microspheres comprises :

(a) providing an aqueous solution of sodium alginate ;

(b) providing a reaction solution comprising an organic solvent saturated with calcium chloride ;

(c) passing the aqueous solution and the reaction solution through a spray nozzle having concentric inner and outer jets to blend the solutions prior to or upon exiting from an orifice in the spray nozzle, to form calcium alginate microspheres having a diameter of from about 10 to 50 micrometres ; and

(d) recovering the calcium alginate microspheres.

This preferred aspect of the second method of preparation employs a spray nozzle having two concentric jets, permitting two incompatible solutions, such as sodium alginate and calcium chloride, to blend just prior to or upon exiting from the nozzle orifice. According to the second method of preparation, the nozzle and/or jet placement allows the parameters affecting the algin/calcium reaction to be controlled. Thus, for example, withdrawal of the inner jet provides a greater mixing time before the algin and calcium solutions are atomized upon exiting from the orifice.

According to the second method of preparation, hydrocolloid particle size is controlled by the atomization pressure, the viscosity of the sodium alginate solution, and the concentric spray-nozzle configuration. Spray pressure and algin viscosity follow in accordance with the first method. The internal diameters of the concentric jets of the spray nozzle are generally approximately 0.7 mm and 0.25-0.32 mm.

In accordance with a third method of preparation, hydrocolloid-based microspheres are prepared by a process which comprises :

(a) providing an aqueous solution of an alkali metal alginate and a sequesterant ;

(b) providing a solution of a calcium salt ;

(c) passing the solutions through feedtubes of a spray nozzle into a mixing chamber of the spray nozzle, to mix said solutions ;

(d) atomizing the alginate mixture through an orifice of the spray nozzle into a calcium releasing bath to form hydrocolloid-based microspheres ; and

(e) recovering the microspheres.

Similar to the first and second methods, the alkali metal alginate may be selected from potassium alginate, sodium alginate and mixtures thereof. Preferably, the alkali metal alginate comprises sodium alginate.

Preferred sequesterants may be selected from hexametaphosphate, sodium citrate, aminopolycarboxylic acids, hydroxycarboxylic acids, trisodium phosphate, tetrasodium pyrophosphate and mixtures thereof. Exemplary aminopolycarboxylic acids include ethylenediaminetetraacetic acid ; usable hydroxycarboxylic acids include gluconic, citric and tartaric acids.

The calcium salt utilized in accordance with the third method preferably comprises any one of a number of useful calcium salts, such that a calcium alginate gel is formed in the mixing chamber of the spray nozzle, and calcium alginate microspheres are provided upon atomization of the gel through an orifice of the spray nozzle. Exemplary useful calcium salts include those selected from calcium acetate, calcium carbonate, calcium sulfate, calcium chloride, calcium phosphate, calcium oxalate and calcium hydroxide.

The atomizing step performed in the third method of preparation is carried out at a pressure greater than 5 psi, is preferably carried out at a pressure of from 10 to 100 psi, and most preferably is carried out at a pressure of from 20 to 60 psi.

The alginate gel may be atomized at a spray rate of from 1 to 200 ml/min., and preferably is atomized at a spray rate of from 5 to 20 ml/min. As with the other methods of the invention, significantly higher spray rates may be employed under production-scale operating conditions.

In accordance with a preferred form of the third method of preparation, the alginate gel is atomized into a calcium releasing bath having a density which is less than the density of the microspheres produced. This calcium releasing bath preferably comprises an organic solvent selected from methyl alcohol, ethyl alcohol, isopropyl alcohol, butyl alcohol, acetone, ethyl acetate and mixtures thereof. The organic solvent may comprise from 80 to 100% by weight of the calcium releasing bath. It is understood that the calcium releasing bath may include sufficient water to facilitate dissolving the calcium salt. The calcium releasing bath employed in accordance with the third method of preparation contains an organic or inorganic acid which releases the calcium into the bath. Suitable organic or inorganic acids which will activate the calcium releasing bath include those selected from citric acid, tartaric acid, malic acid, fumaric acid, hydrochloric acid, phosphoric acid and mixtures thereof. The aqueous solution of the alkali metal alginate preferably comprises from 0.25 to 3.0% by weight of alkali metal alginate, based on the total weight of the aqueous solution. Also preferably, the aqueous solution of alkali metal alginate should have a viscosity which is less than or equal to about 300 cps.

The sequesterant employed is preferably present in amounts of from 0.1 to 20% by weight, based upon the total weight of the aqueous solution. Generally, a sufficient amount of sequesterant should be employed to provide the desired delay in gel formation.

A preferred form of the third method of preparation provides a method for preparing calcium alginate microspheres which comprises :

(a) providing an aqueous solution of sodium alginate and a sequesterant selected from hexametaphosphate, sodium citrate, and mixtures thereof ;
(b) providing a solution of a calcium salt ;
(c) passing the solutions through feedtubes of a spray nozzle into a mixing chamber of the spray nozzle, to mix the solutions ;
(d) atomizing the calcium alginate mixture through an orifice of the spray nozzle into a calcium releasing bath to form microspheres of calcium alginate, the calcium releasing bath having a density which is less than the density of the microspheres ; and
(e) recovering the calcium alginate microspheres.

Thus, the preferred form of the third method of the invention contemplates atomizing a solution of (1) sodium alginate with sequesterant and (2) a calcium salt through concentric jets, such as concentric venturi jets. The solutions are mixed in the mixing chamber of the nozzle prior to reaching the orifice, and the preformed calcium alginate gel exits as a fine mist. The sequesterant provides a time delay to permit mixing without formation of a calcium alginate gel in the nozzle chamber. The spray is preferably directed into a calcium releasing bath having a density which is less than that of the calcium alginate particles, such as an ethyl alcohol/acid calcium releasing bath.

In accordance with the third method of preparation, hydrocolloid particle size can be controlled by the atomization pressure, the viscosity of the sodium alginate solution, the particular sequesterant employed, and the spray-nozzle configuration.

According to the fourth method of preparation, hydrocolloid-based microspheres are prepared by a process which comprises :

(a) heating an aqueous solution of a calcium salt to approximately 160°C ;
(b) adding an alkali metal alginate to the aqueous solution, ensuring that the temperature of the aqueous solution does not fall below approximately 160°, to form calcium alginate ;

(c) atomizing the calcium alginate through a heated orifice of a spray nozzle into a cooling chamber, to form hydrocolloid-based microspheres ; and

(d) recovering the microspheres.

The calcium salt employed in accordance with the fourth method of preparation may be selected from calcium acetate, calcium carbonate, calcium sulfate, calcium chloride, calcium phosphate, calcium oxalate, calcium hydroxide and mixtures thereof.

Suitable alkali metal alginates may again be selected from potassium alginate, sodium alginate and mixtures thereof, with sodium alginate being preferred.

Generally, useful cooling chamber systems include, for example, cool air tunnels or cool solvent tunnels, well known to those skilled in the art.

The addition of alkali metal alginate to the heated aqueous solution of a calcium salt preferably is accompanied by mixing, in order to dissolve the alginate. The degree of mixing required depends on whether the alginate is added as a dry powder (thorough mixing required), or as a slurry, in which case less mixing is needed to dissolve the alginate.

Other aspects of the fourth method, such as spray rate and pressure, follow in accordance with the previously described methods of the invention.

All of the above-described methods of preparation provide a hydrocolloid-based, reduced calorie bulking agent and lubricant which has superior utility as a fat-sparing ingredient in foodstuffs. The hydrocolloid-based bulking agents and lubricants provided in accordance with the invention overcome the excessively gritty or fibrous mouthfeel of other low or non-caloric bulking agents, such as bran or cellulose.

As enumerated above, the hydrocolloid microspheres may be employed in a wide variety of foodstuffs and confections as low or non-caloric bulking agents, and may also act as carriers to entrap other ingredients such as flavors or humectants. Additionally, the hydrocolloid microspheres may be part of a combination system which would include other lubricants such as oils or glycerin.

The following examples are given to illustrate the invention, but are not deemed to be limiting thereof. All percentages given throughout the specification are based upon weight percent, unless otherwise indicated.

Example 1

Preparation of Bread

A loaf of bread is prepared according to known methods, using the following ingredients :

| | |
|---|---|
| 1 cup lukewarm water | 2 1/2 to 2 3/4 cups sifted flour |
| 1 1/2 teaspoons salt | 1 cup hydrocolloid bulking agent |
| 1 package yeast | Sesame or poppy seeds |
| | 1 tablespoon shortening |

Example 2

Preparation of Pastry

A pastry is prepared according to known methods, using the following ingredients :

| | |
|---|---|
| 3 3/4 cups sifted all-purpose flour | 1 1/4 cups lukewarm milk |
| 1 1/2 cups hydrocolloid bulking agent | 1/4 cup sugar |
| | 1 egg, beaten |
| 1 1/2 packages dry yeast | 1 cup shortening |

Example 3

Preparation of Ice Cream

Vanilla ice cream is prepared according to known methods, using the following ingredients :

```
1 1/2 cups milk                8 egg yolks

2 1/2 cups hydrocolloid        3/4 cup sugar
    bulking agent
                               1/4 teaspoon salt
1 vanilla bean
```

Example 4

Preparation of Spaghetti Sauce

Spaghetti sauce is prepared according to known methods, using the following ingredients :

```
1 cup dried white mushrooms    2 tablespoons olive oil

1 pound ground chuck           4 cups canned Italian
                                   plum tomatoes
2 large onions, chopped
                               2 cups hydrocolloid
1/4 pound prosciutto               bulking agent

2 tablespoons sweet butter     1 small can tomato
                                   paste
```

Exemple 5

Preparation of Cake

Chocolate cake is prepared according to known methods, using the following ingredients :

```
1 four-ounce package sweet     1 teaspoon vanilla extract
    cooking chocolate
                               2 1/2 cups sifted cake
1/2 cup boiling water              flour

1/2 cup butter, at room        1 teaspoon baking soda
    temperature
                               1/2 teaspoon salt
1 cup hydrocolloid
    bulking agent              1 cup buttermilk

4 eggs, separated              2 cups granulated sugar
```

Example 6

Preparation of Confectionery

A fiber-containing confectionery composition is prepared according to known methods, using the following ingredients :

| Ingredient | Percent w/w |
|---|---|
| High Fructose Corn Syrup 55 | 9.25 |
| Gum Arabic | 0.35 |
| Dextrin | 0.17 |
| Gelatin | 0.48 |
| Corn Syrup, Regular* | 21.26 |
| High Fructose Corn Syrup 42 | 21.26 |
| Glycerine Anhydrous | 3.32 |
| Palm Kernel Oil | 8.62 |
| Malic Acid | 0.30 |
| Apple Flavor | 0.20 |
| Water** | 1.62 |
| Hydrocolloid Bulking Agent | 33.16 |

*Cooked to 135°C; weight loss approximately 18%.
**Total water is 7.4 ± 0.1% by weight.

Example 7

Preparation of Sausage

Sausage is prepared according to known methods, using the following ingredients :

| | |
|---|---|
| 9 pounds fresh lean pork | 1 1/2 tablespoons freshly ground black pepper |
| 3/4 teaspoon red pepper | 1 1/2 tablespoons crushed sage |
| 3 tablespoons salt | 6 yards sausage casing |
| 6 cups hydrocolloid bulking agent | |

Example 8

Preparation of Chewing Gum

Chewing gum is prepared according to known methods, using the following ingredients :

| Ingredient | Percent w/w |
|---|---|
| Gum Base | 21.0 |
| Corn Syrup | 16.5 |
| Sugar (powdered) | 34.1 |
| Hydrocolloid Bulking Agent | 20.0 |
| Dextrose | 6.0 |
| Glycerin | 0.45 |
| Lecithin | 0.2 |
| Flavor (peppermint oil) | 0.9 |
| Maltodextrin | 0.75 |

Example 9

Preparation of Chewing Gum Crystal Type Center-Fill
A center-fill composition for chewing gum is prepared according to known methods, using the following

9

ingredients :

| Ingredient | Percent w/w |
|---|---|
| Sugar | 72.0 |
| Grape Flavor | 1.0 |
| Citric Acid | 2.3 |
| Hydrocolloid Bulking Agent | 24.7 |

Example 10

Preparation of Custard

An English custard is prepared according to known methods, using the following ingredients :

3 cups milk

5 egg yolks

1/3 cup sugar

1 teaspoon vanilla extract

1 cup hydrocolloid bulking agent

1 1/2 tablespoons flour

The invention being thus described, it will be obvious that the same may be varied in many ways. Such variations are not to be regarded as a departure from the spirit and scope of the invention and all such modifications are intended to be included within the scope of the following claims.

The term "alkali metal" is used herein to mean the metals of Group IA of the Periodic Table. The term "alkaline earth metal" is used herein to mean the metals of Group IIA of the Periodic Table.

## Claims

1. A hydrocolloid-based composition comprising cross-linked alkaline earth metal alginate microspheres having a diameter of from 1.0 to 200 micrometres.

2. A hydrocolloid-based composition according to claim 1, wherein the microspheres have a diameter of from 5 to 100 micrometres.

3. A hydrocolloid-based composition according to claim 1 or 2, wherein the microspheres have a diameter of from 10 to 50 micrometres.

4. A hydrocolloid-based composition according to any preceding claim, wherein the alkaline earth metal alginate comprises calcium alginate.

5. A hydrocolloid-based composition according to any preceding claim, present in an edible or other consumable material selected from natural and artificial meat, processed meat and meat by-products, baby food, jelly and jams, gelatin and puddings, peanut butter, frostings and icings, baked goods, dairy products, dressings, juices, sauces, pet foods, cereals, nut additives, instant breakfasts, confectioneries and gums, chocolates, soups, ice cream, non-dairy toppings and beverages, toothpaste and shaving cream.

6. A hydrocolloid-based composition according to claim 5, wherein the natural and artificial meat, processed meat and meat by-products are selected from sausage, bacon, corned beef hash, pepperoni, bologna, hot dogs and spam.

7. A hydrocolloid-based composition according to claim 5, wherein the baked goods contain flour and are selected from dough, cookies, pastries, filled pastries, cakes, cupcakes, doughnuts, breads and pies.

8. A hydrocolloid-based composition according to claim 5, wherein the dairy products are selected from butter, yogurt, margarine, sour cream, cream cheese, milk, evaporated milk, milk concentrate, cheese and cheese products and mayonnaise.

9. A hydrocolloid-based composition according to claim 5, wherein the dressings are selected from meat and vegetable dressings.

10. A hydrocolloid-based composition according to claim 5, wherein the juices are selected from orange juice, apple juice, pineapple juice, cranberry juice, lemon juice, lemonade and grapefruit juice.

11. A hydrocolloid-based composition according to claim 5, wherein the sauces are selected from spaghetti sauce, gravy mixes, seasoning sauce, barbecue sauce, taco and salsa sauces, steak sauces, ketchup and mustard.

12. A hydrocolloid-based composition according to claim 5, wherein the pet foods are selected from cat food, dog food and fish food.

13. A hydrocolloid-based composition according to claim 5, wherein the confectioneries and gums are selected from candies, pressed tablets, lozenges, chewing gum and bubble gum.

14. A hydrocolloid-based composition according to claim 13, wherein the candies are selected from chocolates, nougats, fondant cremes, caramel and marshmallow.

15. A hydrocolloid-based composition according to any one of claims 5 to 14, wherein the hydrocolloid-based composition comprises from 33 to 50% by weight of the edible or other consumable material, based on the total weight of that material.

16. A process for producing a hydrocolloid-based composition according to any preceding claim, which process comprises :
    (a) reacting an alkali metal alginate with a multivalent cation to form hydrocolloid-based microspheres having a diameter of from 1.0 to 200 micrometres ;
    (b) recovering the microspheres.

17. A process according to claim 16, which process comprises :
    (a) providing an aqueous solution of an alkali metal alginate ;
    (b) providing a reaction solution comprising an organic solvent which includes therein a multivalent cation ;
    (c) atomizing the aqueous alkali metal alginate into the reaction solution to form hydrocolloid-based microspheres ; and
    (d) recovering the microspheres.

18. A process according to claim 16, which process comprises :
    (a) providing an aqueous solution of an alkali metal alginate ;
    (b) providing a reaction solution comprising an organic solvent which includes therein a multivalent cation ;
    (c) passing the aqueous solution and the reaction solution through a spray nozzle to blend the solutions prior to or upon exiting from an orifice of the spray nozzle, to form hydrocolloid-based microspheres ; and
    (d) recovering the microspheres.

19. A process according to claim 16, which process comprises :
    (a) providing an aqueous solution of an alkali metal alginate and a sequesterant ;
    (b) providing a solution of a calcium salt ;
    (c) passing the solutions through feedtubes of a spray nozzle into a mixing chamber of the spray nozzle, to mix the solutions ;
    (d) atomizing the alginate mixture through an orifice of the spray nozzle into a calcium releasing bath to form hydrocolloid-based microspheres ; and
    (e) recovering the microspheres.

20. A process according to claim 16, which process comprises :

(a) heating an aqueous solution of a calcium salt to approximately 160°C ;

(b) adding an alkali metal alginate to the aqueous solution, ensuring that the temperature of the aqueous solution does not fall below 160°C, to form calcium alginate ;

(c) atomizing the calcium alginate through a heated orifice of a spray nozzle into a cooling chamber, to form hydrocolloid-based microspheres ; and

(d) recovering the microspheres.

**Claims for the following Contracting State : ES**

1. A process for producing a hydrocolloid-based composition, which process comprises :

(a) reacting an alkali metal alginate with a multivalent cation to form hydrocolloid-based microspheres having a diameter of from 1.0 to 200 micrometres ;

(b) recovering the microspheres.

2. A process according to claim 1, wherein the microspheres have a diameter of from 5 to 100 micrometres.

3. A process according to claim 1 or 2, wherein the microspheres have a diameter of from 10 to 50 micrometres.

4. A process according to any preceding claim, wherein the alkaline earth metal alginate comprises calcium alginate.

5. A process according to any preceding claim, which additionally includes incorporating the microspheres in an edible or other consumable material selected from natural and artificial meat, processed meat and meat by-products, baby food, jelly and jams, gelatin and puddings, peanut butter, frostings and icings, baked goods, dairy products, dressings, juices, sauces, pet foods, cereals, nut additives, instant breakfasts, confectioneries and gums, chocolates, soups, ice cream, non-dairy toppings and beverages, toothpaste and shaving cream.

6. A process according to claim 5, wherein the natural and artificial meat, processed meat and meat by-products are selected from sausage, bacon, corned beef hash, pepperoni, bologna, hot dogs and spam.

7. A process according to claim 5, wherein the baked goods contain flour and are selected from dough, cookies, pastries, filled pastries, cakes, cupcakes, doughnuts, breads and pies.

8. A process according to claim 5, wherein the dairy products are selected from butter, yogurt, margarine, sour cream, cream cheese, milk, evaporated milk, milk concentrate, cheese and cheese products and mayonnaise.

9. A process according to claim 5, wherein the dressings are selected from meat and vegetable dressings.

10. A process according to claim 5, wherein the juices are selected from orange juice, apple juice, pineapple juice, cranberry juice, lemon juice, lemonade and grapefruit juice.

11. A process according to claim 5, wherein the sauces are selected from spaghetti sauce, gravy mixes, seasoning sauce, barbecue sauce, taco and salsa sauces, steak sauces, ketchup and mustard.

12. A process according to claim 5, wherein the pet foods are selected from cat food, dog food and fish food.

13. A process according to claim 5, wherein the confectioneries and gums are selected from candies, pressed tablets, lozenges, chewing gum and bubble gum.

14. A process according to claim 13, wherein the candies are selected from chocolates, nougats, fondant cremes, caramel and marshmallow.

15. A process according to any one of claims 5 to 14, wherein the hydrocolloid-based composition comprises from 33 to 50% by weight of the edible or other consumable material, based on the total weight of that ma-

EP 0 437 360 A1

terial.

16. A process according to claim 1, which process comprises :
(a) providing an aqueous solution of an alkali metal alginate ;
(b) providing a reaction solution comprising an organic solvent which includes therein a multivalent cation ;
(c) atomizing the aqueous alkali metal alginate into the reaction solution to form hydrocolloid-based microspheres ; and
(d) recovering the microspheres.

17. A process according to claim 1, which process comprises :
(a) providing an aqueous solution of an alkali metal alginate ;
(b) providing a reaction solution comprising an organic solvent which includes therein a multivalent cation ;
(c) passing the aqueous solution and the reaction solution through a spray nozzle to blend the solutions prior to or upon exiting from an orifice of the spray nozzle, to form hydrocolloid-based microspheres ; and
(d) recovering the microspheres.

18. A process according to claim 1, which process comprises :
(a) providing an aqueous solution of an alkali metal alginate and a sequesterant ;
(b) providing a solution of a calcium salt ;
(c) passing the solutions through feedtubes of a spray nozzle into a mixing chamber of the spray nozzle, to mix the solutions ;
(d) atomizing the alginate mixture through an orifice of the spray nozzle into a calcium releasing bath to form hydrocolloid-based microspheres ; and
(e) recovering the microspheres.

19. A process according to claim 1, which process comprises :
(a) heating an aqueous solution of a calcium salt to approximately 160°C ;
(b) adding an alkali metal alginate to the aqueous solution, ensuring that the temperature of the aqueous solution does not fall below 160°C, to form calcium alginate ;
(c) atomizing the calcium alginate through a heated orifice of a spray nozzle into a cooling chamber, to form hydrocolloid-based microspheres ; and
(d) recovering the microspheres.

13

## EUROPEAN SEARCH REPORT

European Patent Office

Application Number

EP 91 30 0169

### DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| X | WO-A-8 912 403 (THE NUTRASWEET COMPANY)<br>* page 3, "Summary"; examples 4,5 *<br>--- | 1-17 | A 23 L 1/0532<br>A 23 L 1/307 |
| X | DATABASE WPIL/DERWENT accession no. 86-193350 (30), 1986, Derwent Publications Ltd., London, GB; & JP - A - 61126016 (TOA GOSEI CHEM. IND. LTD.) 13.06.1986<br>* whole abstract *<br>--- | 1-4 | |
| A | US-A-2 859 115 (EUGENE JOEL RIVOCHE)<br>* whole abstract *<br>--- | 1-17 | |
| A | DE-A-3 028 371 (QUAKER OATS LTD.)<br>* whole document *<br>--- | 5-17 | |
| A | EP-A-0 273 823 (MERO ROUSSELOT SATIA)<br>* column 5, lines 44,45; example 5 *<br>--- | 1-4 | |
| A | US-A-2 786 764 (EUGENE JOEL RIVOCHE)<br>* examples; claims *<br>----- | 5-17 | TECHNICAL FIELDS SEARCHED (Int. Cl.5)<br><br>A 23 L<br>A 61 K |

The present search report has been drawn up for all claims

| Place of search | Date of completion of the search | Examiner |
|---|---|---|
| BERLIN | 19-03-1991 | ALVAREZ Y ALVAREZ C |